# EUROPEAN PATENT APPLICATION

(11) **EP 3 620 132 A1**
(43) Date of publication of application: **11.03.2020**
(21) Application number: 19808670.4
(22) Date of filing: 28.05.2019
(51) Int. Cl.: A61C 17/22

(54) **ELECTRIC TOOTHBRUSH**

(30) Priority: 01.06.2018 JP 2018105865
(71) Applicant: SANFAT ELECTRICAL MANUFACTURING COMPANY LIMITED, Tsim Sha Tsui Kowloon, Hong Kong (CN); Shiken Co., Ltd., Osaka-shi Osaka 543-0045 (JP)
(72) Inventor: IKEJIRI, Takahiro, Osaka-shi Osaka 5430045 (JP); ENDO, Yoshikazu, Osaka-shi Osaka 5430045 (JP); TERAMOTO, Masanori, Tokyo 1118682 (JP); KASAHARA, Eiji, Tokyo 1118682 (JP); UMEDA, Yu, Tokyo 1118682 (JP); MORITA, Keitoku, 523710 (CN); ISHITA, Toshiya, 523710 (CN); LI, Huiqun, 523710 (CN); BI, Huadong, 523710 (CN); HE, Feigang, 523710 (CN)
(74) Representative: Ter Meer Steinmeister & Partner
(86) International application number: PCT/JP2019/021043
(87) International publication number: WO 2019/230704

(57) **Abstract**

An electric toothbrush comprises: a main body part (12) provided with a first electrode (11); a second electrode (17) provided at an end in the longitudinal direction of the main body part and connected to one end of the main body part; a brush part (16) including a brush base (15) in which brush bristles (14) are embedded, and connected to the second electrode; a power supply part (30); a current detecting part (36) for detecting a weak current generated by the user holding the brush part in the oral cavity of the user while touching the first electrode; and a vibration generating unit (38). The vibration generating unit is driven when the weak current is detected by the current detecting part.

## Description

### Technical Field

The present disclosure relates to an electric toothbrush.

### Background Art

An electric toothbrush for plaque control has been proposed to prevent the formation of plaque (tooth tartar) adhering to intraoral tooth and to remove the generated plaque by using the photocatalytic action of N-type semiconductor such as titanium oxide. When the titanium oxide is irradiated with light containing ultraviolet light, electrons and holes are formed at the surface by the photocatalytic action. A redox reaction caused by such photocatalytic action can finally decompose organic substances resulting in dirt and odor, to CO₂ and H₂O. An electric toothbrush using the N-type semiconductor such as titanium oxide having such a photocatalytic action can decompose and remove bacteria present in the oral cavity, plaques attached to tooth, and organic acids such as lactic acid, by which the formation of dental caries and periodontal disease can be prevented.

Japanese Patent Laid-Open No. 1994-90,824 discloses an electric toothbrush comprising a grip provided with a motor, a DC power supply for driving the motor, a switch for turning on and off a conduction state between the DC power supply and the motor, and a movement converting means for converting a rotational movement of the motor into a small vibration or reciprocation of a flocked part, further comprising an N-type semiconductor which is at least partially inserted into the oral cavity and comes in contact with water across the flocked part and the grip, wherein the N-type semiconductor and a positive electrode of the DC power supply are connected, and a conductor provided on the outer surface of the grip portion is connected to a negative electrode of the DC power supply.

In this electric toothbrush, combining the DC power supply for driving the motor and the N-type semiconductor can further promote to reduce the manufacturing cost and the downsizing of the entire electric toothbrush including the grip portion.

Japanese Patent No. 5,820,494 discloses an electric toothbrush comprising a main body part serving as a handle having a conductive portion, an N-type semiconductor rod provided at the tip of the main body part in the longitudinal direction, a brush part provided with a transparent brush base where brush bristles are embedded, an ultraviolet light emitting element provided at an end of the main body part, a transparent cylindrical light guide covering the ultraviolet light emitting element and a part of the N-type semiconductor rod, and a vibration generating unit integrally formed with a light guide.

Since this electric toothbrush comprises the ultraviolet light emitting element and the N type semiconductor causing a photocatalytic action, even if the electric toothbrush is not irradiated with light from the outside, the ultraviolet light from the ultraviolet light emitting element generates photocatalytic action on the N-type semiconductor. Furthermore, since the electric toothbrush comprises the transparent cylindrical light guide covering the ultraviolet light emitting element and a part of the N-type semiconductor rod, the ultraviolet light emitted by the ultraviolet light emitting element can efficiently reach to the tip of the N type semiconductor. In addition, since the vibration generating unit and the cylindrical light guide are integrally formed, the electric toothbrush can efficiently transmit the vibration and the ultraviolet light.

### SUMMARY

### Means for Solving the Problems

The electric toothbrush of the present disclosure comprises a main body part provided with a first electrode; a second electrode provided at an end in the longitudinal direction of the main body part and connected to one end of the main body part; a brush part including a brush base in which brush bristles are embedded, and connected to the second electrode; a power supply part; a current detecting part for detecting a weak current generated by the user holding the brush part in the oral cavity of the user while touching the first electrode; and a vibration generating unit, wherein the vibration generating unit is driven when the weak current is detected by the current detecting part.

In the electric toothbrush, a voltage is always applied between the first electrode and the second electrode. When the user tries to use this electric toothbrush, the user's hand or finger holding the main body part touches the first electrode. When the user places the electric toothbrush in the oral cavity, a weak current flows between the second electrode and the tooth via saliva etc., and then flows into the first electrode touched by the user's hand or finger via the user's body. When the current detecting part detects this weak current, the vibration generating unit is driven to start a brushing operation. In this electric toothbrush, when the user puts the electric toothbrush into the oral cavity while holding the electric toothbrush (that is, touching the first electrode), the vibration generating unit is driven, so that the user does not need to turn the switch on and off. Furthermore, the weak current has an effect of removing plaque.

### Effect of the Invention

In the electric toothbrush of the present disclosure, the vibration generating unit is driven by the user holding the electric toothbrush (that is, touching the first electrode) and putting it into the oral cavity. Therefore, the user does not need to turn the power switch on and off. For this reason, the electric toothbrush is very convenient for normal users because they do not need to switch on and off the electric toothbrush. Also, for the elderly or disabled people who cannot use their fingers or hands freely, the electric toothbrush is easy to use as there is no need to switch the electric toothbrush on and off.

### Brief Description of Drawings

FIG. 1A is a top view of the electric toothbrush of Embodiment 1.
FIG. 1B is a top view of the electric toothbrush of Embodiment 2.
FIG. 2 is a cross-sectional view of the electric toothbrush of Embodiment 1.
FIG. 3 is a developed view of the electric toothbrush of Embodiment 1.
FIG. 4 is a developed view of the electric toothbrush of Embodiment 1.
FIG. 5 is a circuit diagram of an electric toothbrush of the present disclosure.
FIG. 6A is a view for explaining the basic configuration of the electric toothbrush of the Embodiments 1 and 3.
FIG. 6B is a view for explaining the basic configuration of the electric toothbrush of the Embodiments 2 and 4.

### Description of Embodiments

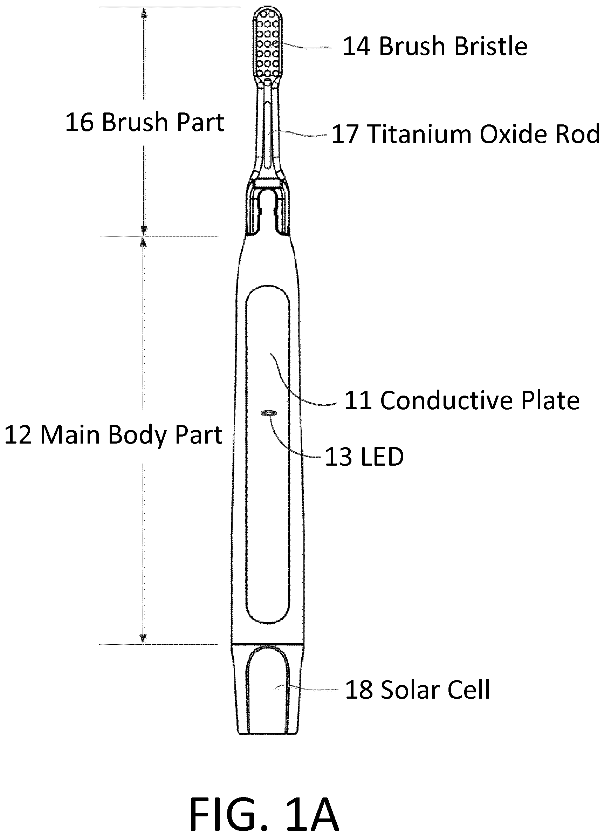

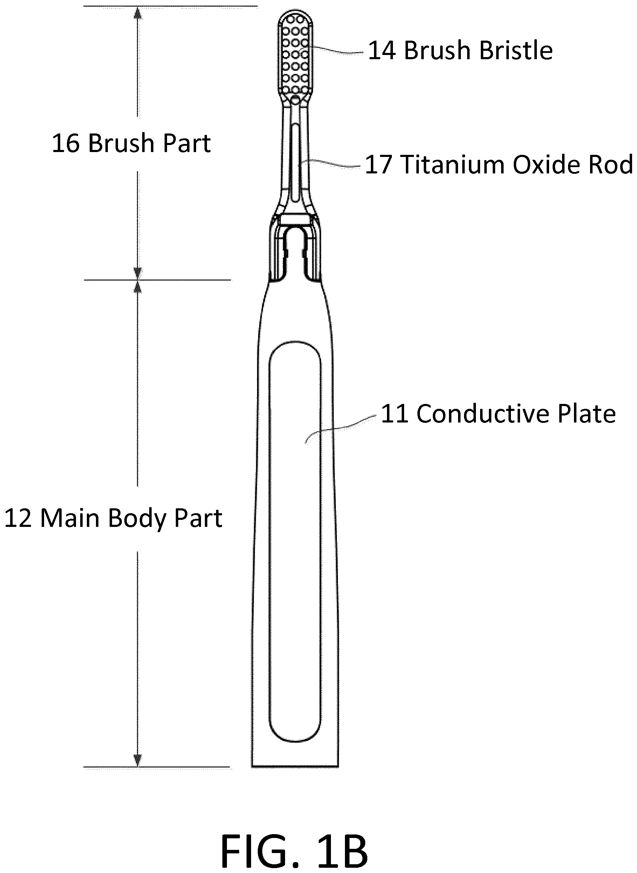

In the electric toothbrush of JPA 1994-90,824, the user must turn on or off the switch 8 shown in FIGS. 1-3 when the user intends to start or end the use of the electric toothbrush. Even for a normal user, it is troublesome to switch on and off the electric toothbrush. In particular, it is extremely difficult for the elderly or disabled people who cannot use their fingers or hands freely to switch on and off the electric toothbrush.

Also in the case of the electric toothbrush of Japanese Patent No. 5,820,494, when the user intends to start or end the use of the electric toothbrush, the user must turn on or off the power switch.

The present disclosure is made corresponding to such a problem, and can provide an effect of providing the electric toothbrush having no power switch.

In the electric toothbrush of the present disclosure, the current detecting part comprises a transistor, and when the weak current flows between the base and the emitter of the transistor, the collector of the transistor becomes a ground potential to drive the vibration generating unit.

In the electric toothbrush, the weak current generated by the user holding the electric toothbrush (that is, touches the first electrode) and putting the electric toothbrush into the oral cavity flows between the base and the emitter of the transistor, which makes the transistor collector to a ground potential. As a result, current flows from the power supply part into the vibration generating unit, which drives the vibration generating unit.

The detection current may be 3-100 µA. When the detection current is less than 3 µA, a switching on may occur due to a malfunction. When it is more than 100 µA, the electric toothbrush may not operate and the user may feel the current.

The electric toothbrush of this disclosure can further be equipped with a display unit for displaying that the current detecting part has detected the weak current. The display unit displays that the weak current has been detected, that is, the electric toothbrush is operating.

The second electrode may be an N-type semiconductor. When the second electrode is the N-type semiconductor, excited electrons and holes are generated by the photocatalytic effect, and conduction is made between the tooth (N-type semiconductor) and the first electrode. Thereby, the detection current can be detected efficiently. Furthermore, due to the photocatalytic effect of the N-type semiconductor, it is possible to generate OH radicals that decompose organic acids such as dental plaque, deposited pigment and lactic acid.

The electric toothbrush of the present disclosure may further comprise a solar cell that applies a voltage to the second electrode. Since the voltage is also applied to the second electrode from the solar cell, consumption of the battery used in the power supply part can be delayed. Furthermore, in the case where the second electrode is the N-type semiconductor, even if the battery is completely consumed and cannot be used, the voltage is supplied from the solar cell, so that plaque etc. attached to the teeth can be removed and decomposed due to the photoelectrochemical reaction.

The second electrode may be a metal. In the case of the electric toothbrush, the tooth (N-type semiconductor) and the first electrode are electrically connected by water such as the conductive saliva having a conductivity therebetween.

The power supply part may be a primary battery or a secondary battery. Thus, the power supply part can supply sufficient power to the vibration generating unit.

The brush part may be detachably fitted to the second electrode. Thereby, the brush part deformed by long-term use can be replaced with a new one.

### (Embodiment 1)

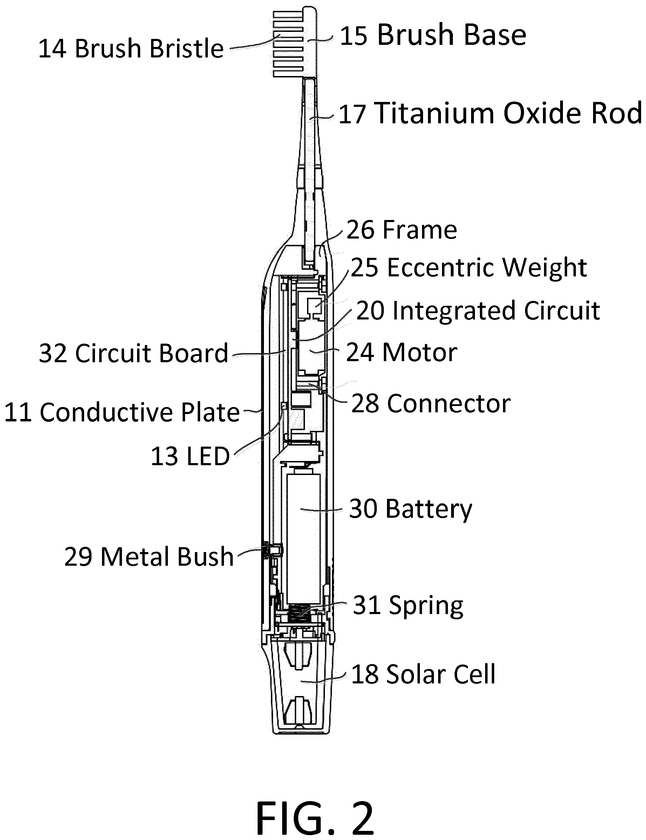

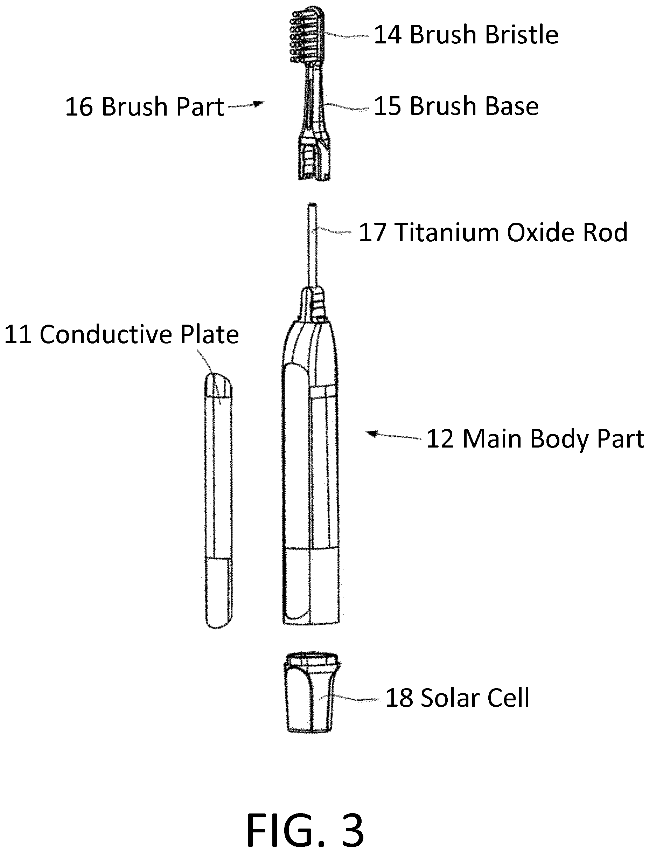

FIG. 1A is a top view showing the entire electric toothbrush of Embodiment 1, FIG. 2 is a cross-sectional view thereof, and FIG. 3 is a developed view thereof. The electric toothbrush according to Embodiment 1 comprises a brush part 16, a main body part 12 and a solar cell 18. The length from the tip of the brush part 16 to the end of the solar cell 18 is 23 cm, and the diameter of the main body part 12 is 2.5 cm. The brush part 16 is formed of a transparent resin, and the brush bristles 14 are embedded in the tip thereof. As shown in FIGS. 2 and 3, the titanium oxide rod 17 is held by the space provided at the tip of the frame 26 of the main body part 12. A space is provided in the frame 26 so as to be fitted into the titanium oxide rod 17 which is an N-type semiconductor protruding from the main body part 12 inside the brush base 15. With this structure, the brush part 16 which cannot stand use after long-term use can be removed from the main body part 12 and replaced with a new one.

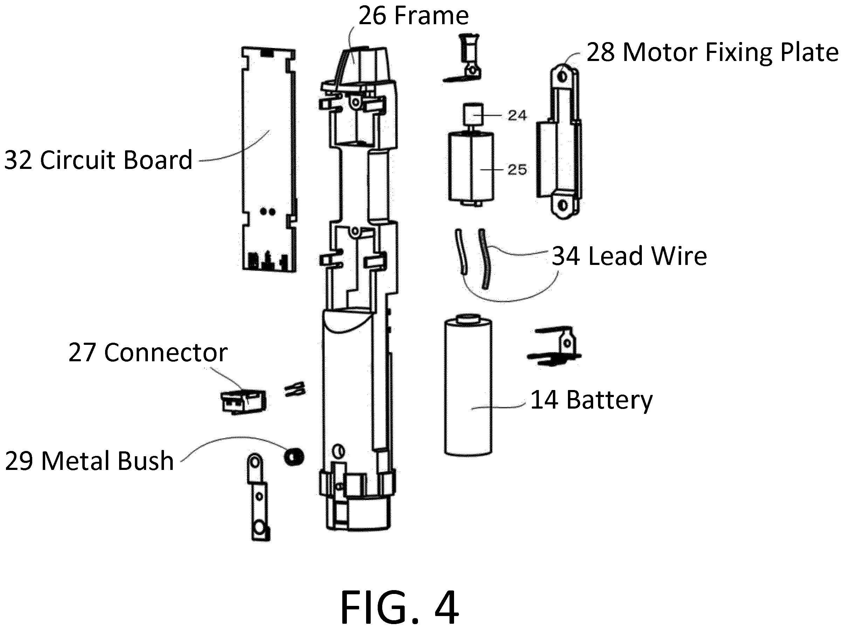

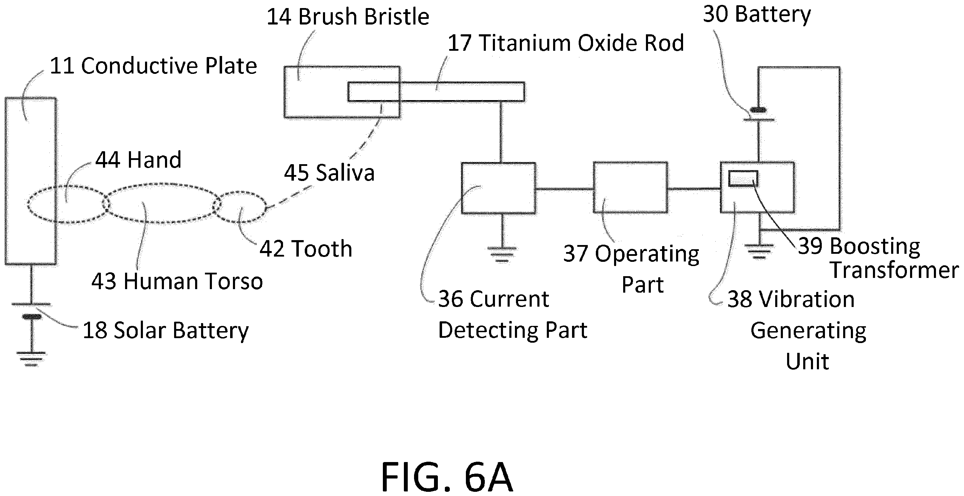

As shown in FIG. 2, an eccentric weight 25 and a motor 24 are provided below the titanium oxide rod 17. The eccentric weight 25 converts the rotational movement of the motor 24 into the reciprocating oscillating movement of the brush part 16. A circuit board 32 is fixed to the frame 26. The circuit board 32 is provided with an integrated circuit 20 and a boosting transformer 33. As shown in FIG. 4, the conductive plate 11 as the first electrode and the anode of the battery 30 are connected by the metal bush 29. The anode of the battery 30 is also connected to the motor 24 by a lead 34. At the lower part of the battery 30, a spring 31 is provided to fix the battery 30 and to electrically conduct with the cathode of the battery 30. The spring 31 is connected to the titanium oxide rod 17 by lead wires 34. The connector 27 fixes the circuit board 32 and the lead wires 34 which are a wiring to the motor. As shown in FIG. 6A, the solar cell 18 is connected between the main body part ground and the conductive plate 11. When the electric toothbrush is driven, an LED 13 may display such drive.

Next, the basic configuration of the electric toothbrush according to Embodiment 1 will be explained based on FIG. 6A. The anode of the solar cell 18 is connected to the conductive plate 11 serving as the first electrode, and the current detecting part 36 is connected to the titanium oxide rod 17 serving as the second electrode. An operating part 37 is connected to the current detecting part 36, and further, a vibration generating unit 38 is connected to the operating part 37. The battery 30 is connected in parallel to the vibration generating unit 38.

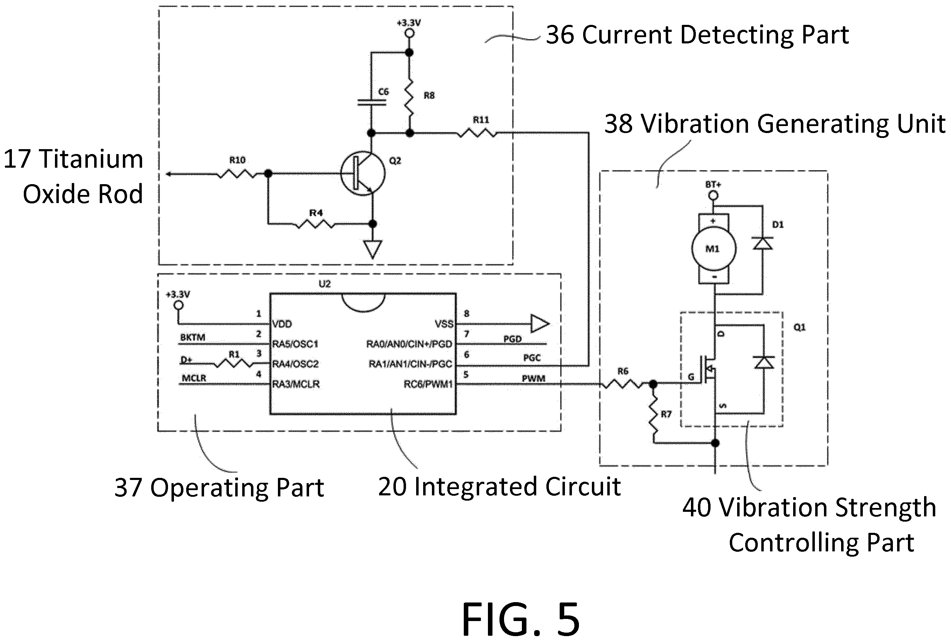

Based on FIG. 5, a specific circuit configuration of the current detecting part 36, the operating part 37, and the vibration generating unit 38 will be explained. The current detecting part 36 connected to the titanium oxide rod 17 comprises a transistor Q2. A voltage of +3.3 V is supplied to the collector of the transistor Q2. The voltage of +3.3 V is obtained by boosting the voltage of the battery 30 by the boosting unit 39 (for example, consisting of a switching circuit and the boosting transformer 33). A resistor R4 is connected between the base and the emitter of the transistor Q2 to detect a weak current. The magnitude of the detection current can be changed by changing the resistance value of the resistor. In the electric toothbrush of Embodiment 1, the resistance R4 = 500 KΩ. The operating part 37 is constituted by an integrated circuit 20, and its PGC terminal is connected to the collector of transistor Q2. The vibration generating unit 38 comprises a motor M1 and a vibration strength controlling part 40. The gate of the field effect transistor constituting the vibration strength controlling part 40 is connected to the PWM terminal of the integrated circuit 20. The vibration strength controlling part 40 controls the strength of the reciprocating vibrational motion of the brush part 16 generated by the motor 30 and the eccentric weight 25.

Next, based on FIG. 5 and FIG. 6A, the operation principle of the electric toothbrush of the Embodiment 1 will be explained. When the user is not using the electric toothbrush, a voltage of +2.5 V from the solar cell 18 is applied to the conductive plate 11, and the integrated circuit 20 is in a sleep mode, so there is no conduction between the conductive plate 11 as the first electrode and the titanium oxide rod 17 as the second electrode. When the user uses the electric toothbrush, the user holds the main body part 12 (conductive plate 11) by hand and inserts the brush part 16 into the oral cavity. In this state, since the titanium oxide rod 17 of the brush part 16 contacts the saliva 45 in the oral cavity, a current path leading to the titanium oxide rod 17 from the conductive plate 11 of the main body part 12, via the user's hand 44 touching the conductive plate 11, the user's torso portion 43, the teeth 42, and the saliva 45, is formed. When the weak current (detection current) flowing in the current path flows into the base of the transistor Q2 of the current detecting part 36, the collector potential of the transistor Q2 falls from +3.3 V to GND. As a result, the voltage at the PGC terminal of the integrated circuit 20 changes from HIGH to LOW, and the sleep state of the integrated circuit 20 is released accordingly. The integrated circuit 20 is programmed to send a signal to the vibration generating unit 38 to turn on the field effect transistor of the vibration generating unit 38 when such a change occurs. When the vibration generating unit 38 receives such a signal, the voltage of the battery 30 is applied to the motor 24 by turning on the field effect transistor, and the motor 24 and the eccentric sleeper 25 are driven. As a result, the titanium oxide rod 17 and the brush part 16 connected thereto perform a reciprocating vibration operation. As described above, the user can drive the electric toothbrush only by holding the main body part 12 and putting it in the oral cavity, so that there is no need to turn on the power switch.

In the case of the electric toothbrush according to Embodiment 1, since the titanium oxide rod 17 which is an N-type semiconductor is used for the second electrode, a photoelectrochemical reaction can be utilized. As described in JPA 1994-90,824, when the N-type semiconductor comes in contact with water such as saliva, a space potential layer is formed due to the difference between the Fermi level of the N-type semiconductor and the oxidation-reduction order of the water. When the N-type semiconductor is irradiated with light, an oxidation reaction by holes in a valence band occurs on the light irradiated surface, water molecules are oxidized, and OH radicals are generated. Furthermore, the excited electrons in a conduction band that have reached the back surface of the N-type semiconductor cause a reduction reaction. Due to the decrease of hydrogen ions, a reaction in which pH increases, or the reduction of dissolved oxygen composed of water such as saliva, OH radicals are generated. These OH radicals are effective in decomposing and removing organic acids such as lactic acid and plaques attached to bacteria and teeth present in the oral cavity, thereby enabling to prevent the occurrence of dental caries and periodontal disease.

In the case of the electric toothbrush of Embodiment 1, the voltage applied to the titanium oxide rod 17 is usually supplied from the battery 30. However, even if the battery 30 is exhausted and the voltage cannot be supplied to the titanium oxide rod 17, if the brush part 16 of the electric toothbrush is in the mouth of the user, a weak current flows in the tooth 42 due to the supplied voltage from the solar cell 18. As a result, OH radicals are generated, and plaque and the like adhering to the teeth can be decomposed and removed.

When the user takes out the brush part 16 of the electric toothbrush from the inside of the oral cavity, the contact between the teeth and the saliva is cut, so the current path existing between the conductive plate 11 and the titanium oxide rod 17 disappears. As a result, the operation of the electric toothbrush ends. In this way, switching off of the electric toothbrush without a power switch is achieved.

In the electric toothbrush of Embodiment 1, the range of the detection current is configured to be 3 to 100 µA. If the detection current is less than 3 µA, a malfunction may occur. If the detection current is more than 100 µA, a current detecting circuit may not operate, and the user may feel the current. Therefore, the range of 3 to 100 µA is appropriate. Even within this range, in particular, it is optimal to set the detection current to 10 µA. In addition, the current which flows while this electric toothbrush is driven is 5 mA.

As described above, in the electric toothbrush according to Embodiment 1, the integrated circuit 20 is held in the sleep mode until the detection current is detected. Therefore, the standby current while the electric toothbrush is not used can be small.

### (Embodiment 2)

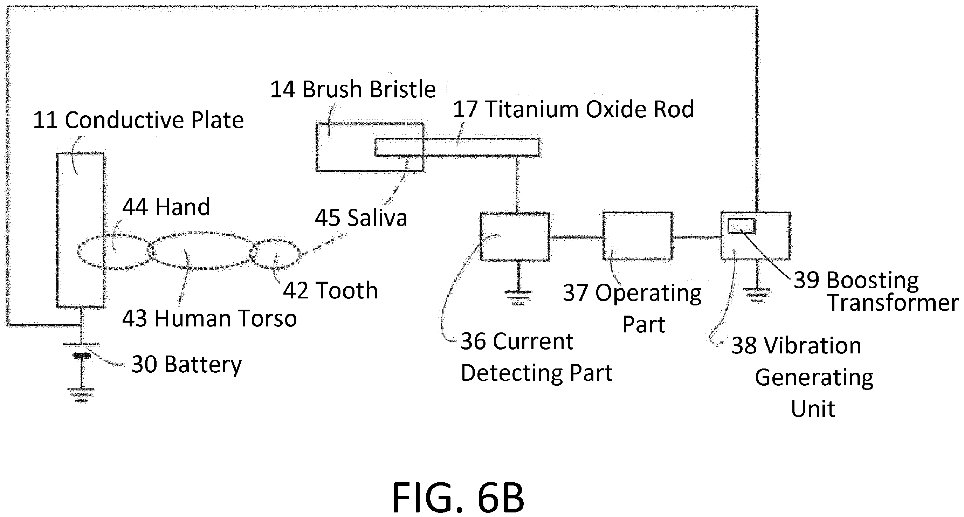

The electric toothbrush of the Embodiment 2 is the electric toothbrush of the Embodiment 1 from which the solar cell 18 is omitted, and its top view is shown in FIG. 1B and its basic configuration is shown in FIG. 6B. In the case of the electric toothbrush of the Embodiment 2, a voltage is applied to the conductive plate 11 from the anode of the battery 30. In the electric toothbrush of Embodiment 2, compared with the electric toothbrush of Embodiment 1, the total length of the brush 16 and the main body part 12 is as short as 20 cm, since the solar cell 18 is not present. Furthermore, since the solar cell 18 is not required, the manufacturing cost of the electric toothbrush can be kept low.

### (Embodiment 3)

The electric toothbrush of Embodiment 3 differs from the electric toothbrush of Embodiment 1 in that the titanium oxide rod 17 as the second electrode is replaced by a stainless steel metal rod 17'. Since the second electrode is a stainless steel metal rod, the manufacturing cost of the electric toothbrush can be kept low.

### (Embodiment 4)

The electric toothbrush of Embodiment 4 is the same as the electric toothbrush of Embodiment 3 except that the solar cell 18 is omitted, and the feature is the same as that of the electric toothbrush of Embodiment 2.

### (Cross-reference to related applications)

The present application is based on Japanese Patent Application No. 2018-105865, filed on June 1, 2018, and the entire specification, claims, and drawings of this Japanese application are incorporated by reference herein.

### Reference Signs List

- 11: Conductive plate
- 12: Main body part
- 14: Brush bristle
- 13: LED
- 15: Brush base
- 16: Brush part
- 17: Titanium oxide rod
- 17': Metal bar
- 18: Solar cell
- 20: Integrated circuit
- 22: Transistor
- 24: Motor
- 25: Eccentric weight
- 26: Frame
- 27: Connector
- 28: Motor fixing plate
- 29: Metal bush
- 30: Battery
- 31: Spring
- 32: Circuit board
- 33: Boosting transformer
- 34: Lead wire
- 36: Current detecting part
- 37: Operating part
- 38: Vibration generating unit
- 39: Boosting transformer
- 40: Vibration strength controlling part
- 42: Tooth
- 43: Human torso part
- 44: Hand
- 45: Saliva

## Claims

1. An electric toothbrush comprising:
a main body part provided with a first electrode;
a second electrode provided at an end in the longitudinal direction of 9 the main body part and connected to one end of the main body part;
a brush part including a brush base in which brush bristles are embedded, and connected to the second electrode;
a power supply part;
a current detecting part for detecting a weak current generated by the user holding the brush part in the oral cavity of the user while touching the first electrode; and
a vibration generating unit,
wherein the vibration generating unit is driven when the weak current is detected by the current detecting part.

2. The electric toothbrush according to claim 1, wherein the current detecting part comprises a transistor, and when the weak current flows between the base and the emitter of the transistor, the collector of the transistor becomes a ground potential to drive the vibration generating unit.

3. The electric toothbrush according to claim 1 or 2, wherein the detection current is 3 to 100 µA.

4. The electric toothbrush according to any one of claims 1 to 3, further comprising a display unit for displaying that the current detecting part has detected the weak current.

5. The electric toothbrush according to any one of claims 1 to 4, wherein the second electrode is an N-type semiconductor.

6. The electric toothbrush according to claim 5, further comprising a solar cell that applies a voltage to the second electrode.

7. The electric toothbrush according to any one of claims 1 to 4, wherein the second electrode is metal.

8. The electric toothbrush according to any one of claims 1 to 6, wherein the power supply part comprises a primary battery or a secondary battery.

9. The electric toothbrush according to any one of claims 1 to 8, wherein the brush part is detachably fitted to the second electrode.
